# EUROPEAN PATENT APPLICATION

(11) **EP 3 289 931 A1**
(43) Date of publication of application: **07.03.2018**
(21) Application number: 16186913.6
(22) Date of filing: 01.09.2016
(51) Int. Cl.: A47G 21/14, B26B 29/02

(54) **CULINARY UTENSIL HOLDERS**

(71) Applicant: DKB Household UK Limited, Hampshire GU14 7UE (GB)
(72) Inventor: HAGGER, Sam, Woking, Surrey GU21 3LR (GB)
(74) Representative: Miller, James Lionel Woolverton

(57) **Abstract**

A culinary knife block assembly (10) includes a block (12) containing a series of knife holders (18), each knife holder including one or more friction ribs (86) for engagement with a knife (22) and including a resilient latch (94) for releasably attaching the knife holder (18) to the block (12).

## Description

The present invention relates to culinary utensil holders for holding knives and the like, including scissors, knife-sharpening steels and culinary shears.

US 2007/0278165 A1 discloses a knife block assembly having a knife block and a plurality of knife holders in at least three different sizes. Each knife holder is only suitable for knives of a given size/configuration and, in particular, the handles of knives with smaller blades may not align well with others in the block if inserted into large inserts. Additionally, a strap is used to secure knife blades and inserts in the knife block and this is inconvenient since it has to be removed each time a knife is to be removed from the block. Furthermore, if a relatively large knife were to be put into a small insert, when the knife was withdrawn, the insert would be withdrawn with it from the block and this is undesirable.

The present invention aims to alleviate at least to a certain extent the problems of the prior art. Alternatively, the present invention aims to provide a useful culinary utensil holder.

A first aspect of the invention provides a culinary utensil holder for holding knives and the like, the holder comprising a body having an entrance and a distinct friction formation located in a path along the body. Advantageously these features enable knives of different blade sizes and configurations to be held by the same holder.

The body may comprise a sheath having two mutually spaced opposed side walls with a slot therebetween for sheathing a knife or the like. The knife may easily be located in the sheath.

The formation may be formed on one of the side walls. The formation may comprise an elongate rib, the rib optionally having a rectangular, square or convex cross-section extending across a longitudinal extent thereof. Advantageously, the rib may be engaged by a knife over its longitudinal extent, providing predictable friction for the knife.

The holder may include a series of said ribs formed on said one of the side walls, said ribs extending parallel to and spaced from one another. This assists beneficially in holding knives with different blade sizes.

The other side wall may include at least one opposing friction formation, preferably a further series of ribs formed as a mirror image of said ribs. The ribs may advantageously sandwich a knife therebetween.

Said side walls may be generally parallel to one another; and preferably in a rest configuration thereof may taper towards one another in a direction remote from the entrance, optionally being resiliently engaged against one another towards an end of said side walls remote from said entrance. The knife in the region of its point may engage resiliently against faces of the side walls.

The entrance may comprise an elongate ring connected to the side walls.

Each side wall may include a flared entrance guide member at an end of the side wall proximal to the entrance, the flared entrance guide members being spaced from the elongate ring and resilient. The entrance guide members may be flexible for resiliently engaging a knife yet, advantageously, the elongate ring may be substantially rigid.

The holder may include a latch member attached to at least one of the side walls for releasably latching the holder into a culinary utensil block. Advantageously, the latch member may hold the holder in position in a knife block but may enable a knife to be withdrawn from the block without the holder being withdrawn with it.

The latch may be formed integrally, e.g. by moulding, with the side walls.

A further aspect of the invention provides a culinary block assembly including a block with a plurality of slots, and a plurality of culinary utensil holders as set out in the previous aspect hereof adapted to be located in the slots.

The culinary block assembly may include at least two said culinary utensil holders which are identical to one another and are located in respective ones of said slots, and in which at least two knives of different configurations are sheathed in said culinary utensil holder. Advantageously, the user can place the knives in whichever holder position in the block that are desired.

The culinary block assembly may include at least five and optionally at least six, eight or ten identical said culinary utensil holders locatable in corresponding slots formed in said block. This advantageously provides the user with great flexibility and choice as to where the knives are stored since the holder will accept knives of many different shapes and sizes.

A further aspect of the invention provides a culinary utensil holder for holding knives and the like, the holder comprising a body for sheathing kitchen utensils, the body including a latch member for releasably latching the holder into a culinary utensil block, the latch member optionally being formed integrally with said body e.g. by moulding. This advantageously allows the holder to be securely held in a knife block when a knife is withdrawn yet also allows the holder to be removed for cleaning purposes.

The present invention may be carried out in various ways and a preferred culinary utensil holder and culinary block assembly in accordance with the invention will now be described by way of example only and with reference to the accompanying drawings, in which:
Figure 1 shows a preferred embodiment of a culinary block assembly in accordance with an embodiment of the present invention including several preferred culinary utensil holders located therein and with various knives and shears/scissors inserted in the culinary utensil holders;
Figure 2 is an exploded view of the culinary block assembly shown in Figure 1;
Figures 3A to 3F show various views of a main block and its culinary utensil holders of the culinary block assembly;
Figure 4 shows a paring knife with a short thin blade as used in Figure 3;
Figure 5 shows a chef's knife with a long and deep blade as shown in Figure 1;
Figures 6A to 6F show various views of the main block shown in Figure 1;
Figures 7A to 7E show various views of the auxiliary block shown in Figure 1;
Figures 8A to 8G show various views of the culinary utensil holders used in the main block;
Figures 9A to 9G show various views of the culinary utensil holders used in the auxiliary block; and
Figures 10A to 10F show various views of the culinary utensil holder used for shears or a knife-sharpening steel in the main block.

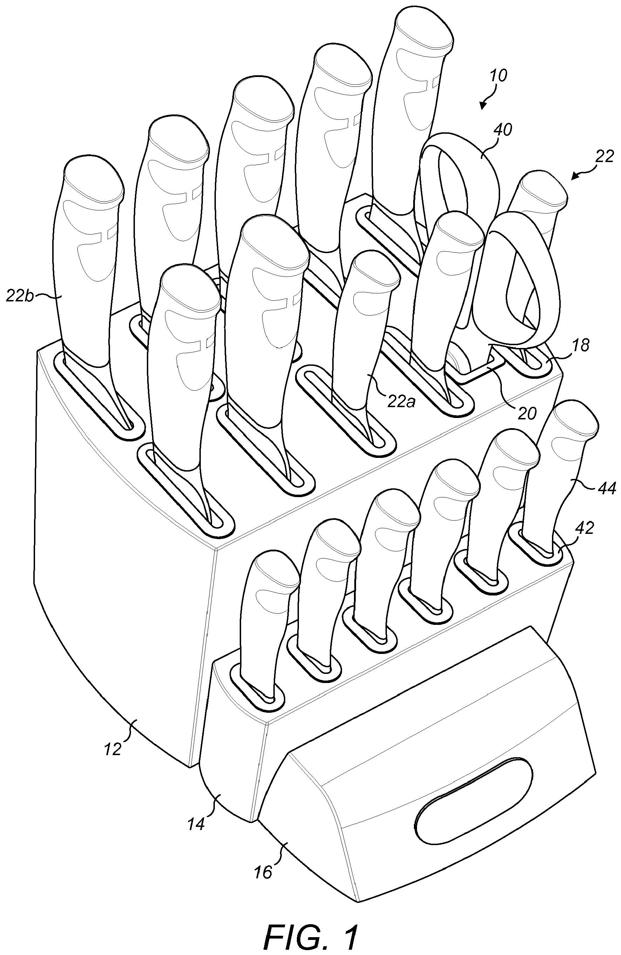

As shown in Figure 1, a culinary knife block assembly 10 includes a main block 12, an auxiliary block 14 and a stand 16, each made of wood although other materials could be used in other embodiments, these three components being secured together for example by adhesive.

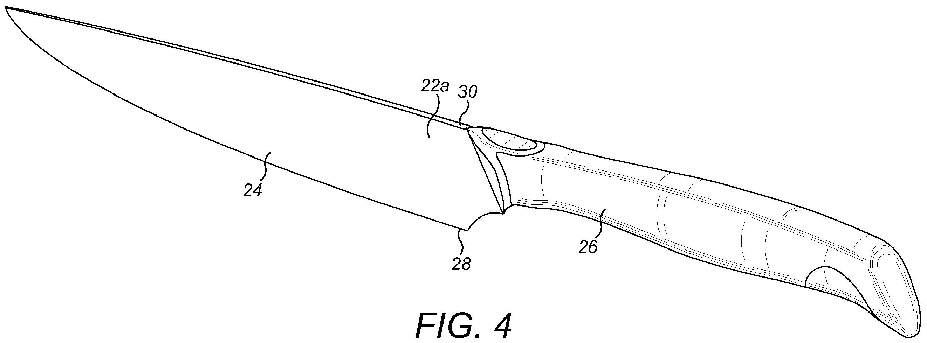

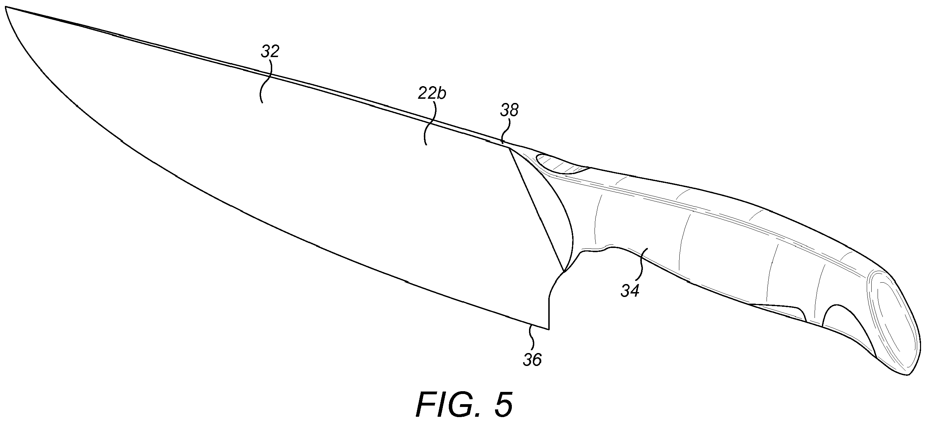

The main block has a series of ten culinary utensil holders in the form of knife holders 18 formed in two rows of five holders each, plus a scissor holder 20. The knife holders 18 are identical to one another and hold an array of knives 22 having blades with varying configurations, including a paring knife 22a, as shown in Figure 4, with a relatively short blade 24 with a relatively short depth near the handle 26 from the sharp lower edge 28 to the top edge 30. The knives also include a chef's knife 22b which, as shown in Figure 5, has a long blade 32, longer than the blade 24, with a large depth near the handle 34 thereof in the direction between its sharp lower edge 36 and its top edge 38, this depth being greater than the equivalent depth in the paring knife 22a shown in Figure 4.

A pair of scissors or shears 40 is inserted in the scissor holder 20.

The auxiliary block 14 includes a series of six auxiliary culinary holders 42 in the form of auxiliary knife holders 42, the auxiliary knife holders 42 in this embodiment each holding one of a matched set of culinary preparation knives 44.

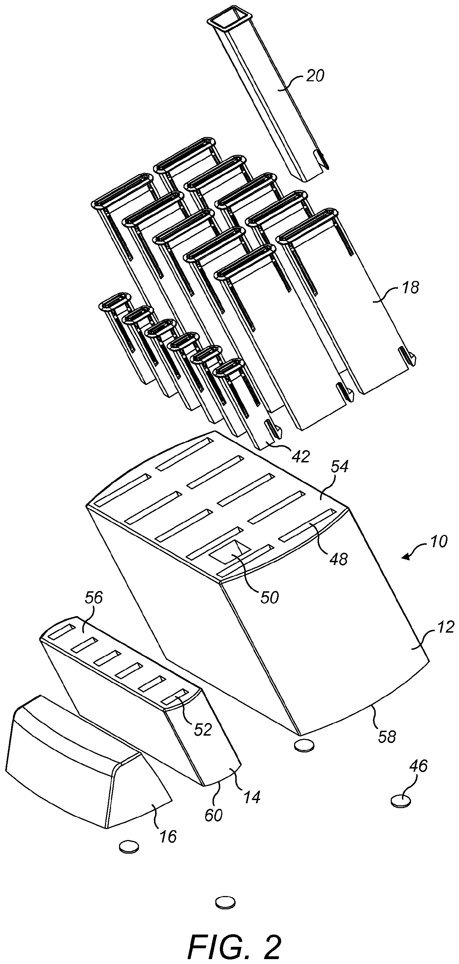

As shown by the exploded view of Figure 2, the culinary knife block assembly 10 also includes four support feet 46 which are circular pads which are fixed to the main block 12 and the stand 16 and/or the auxiliary block 14 for supporting the culinary knife block assembly 10 on a work surface (not shown).

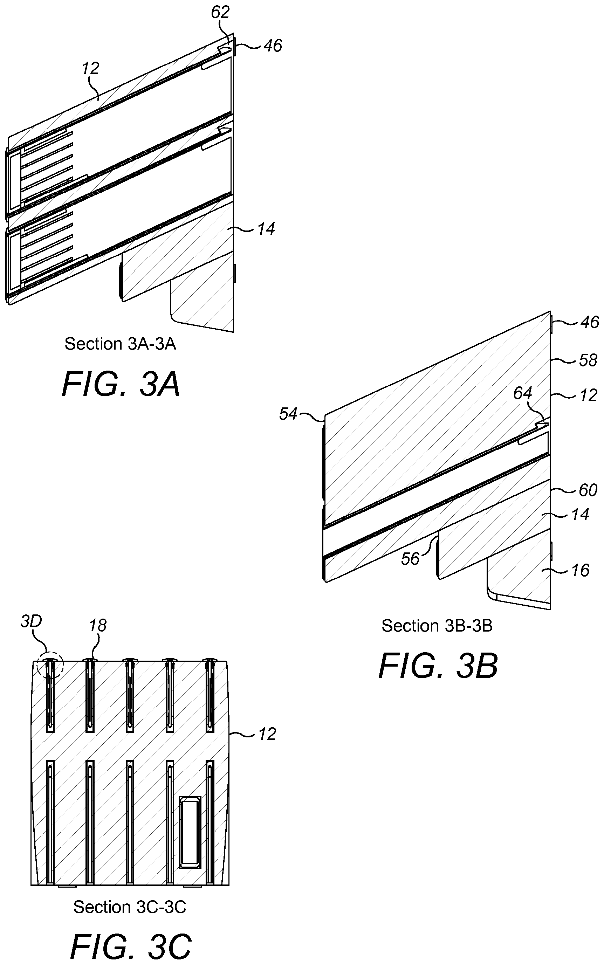

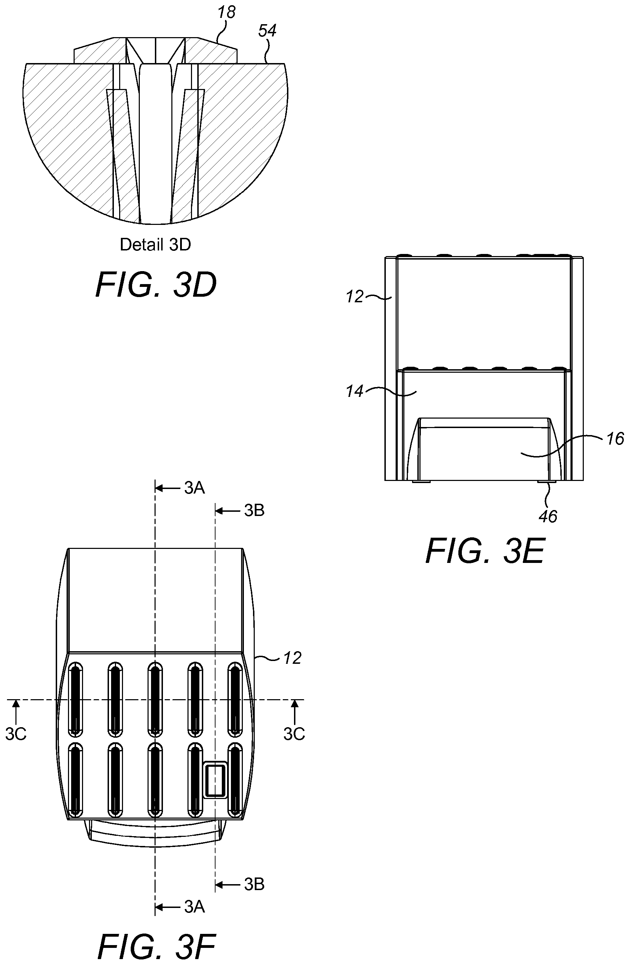

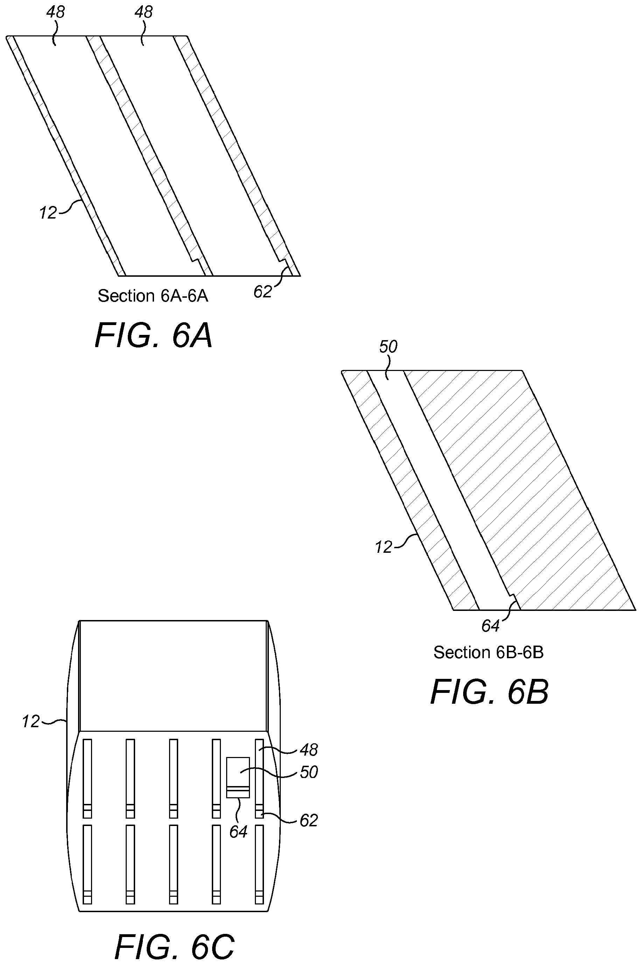

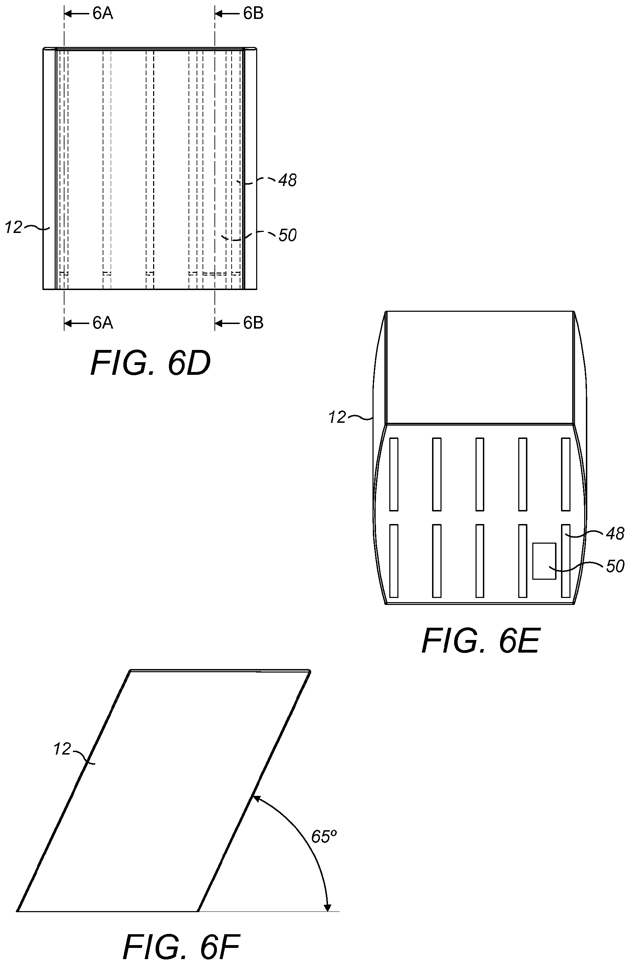

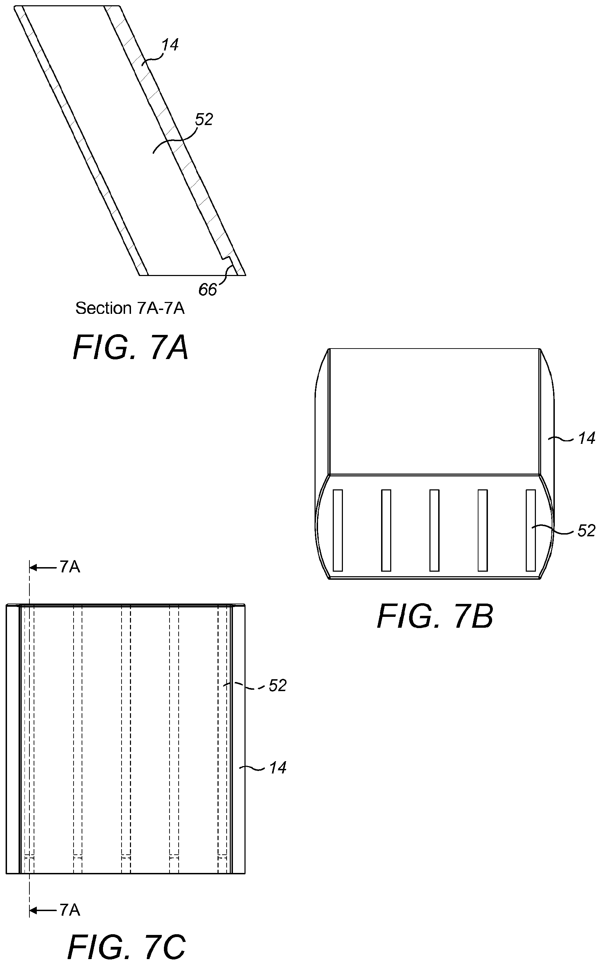

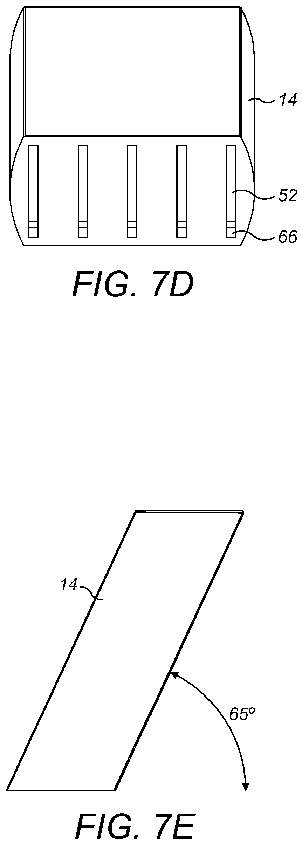

Furthermore, as shown in Figure 2, the knife holders 18, scissor holder 20 and auxiliary knife holders 42 are formed in the shape of sheaths for insertion in corresponding slots 48, 50, 52 which extend all of the way through the main block 12 and auxiliary block 14 from respective top surfaces 54, 56 to bottom surfaces 58, 60 thereof. Each of the slots 48, 50, 52 comprises a rectangular tube, the slots 48, 50, 52 having respective latch recesses 62, 64, 66 formed at the bottom surfaces 58, 60, these recesses 62, 64, 66 being marked at least in Figures 3A, 3B, 6A, 6B and 7A.

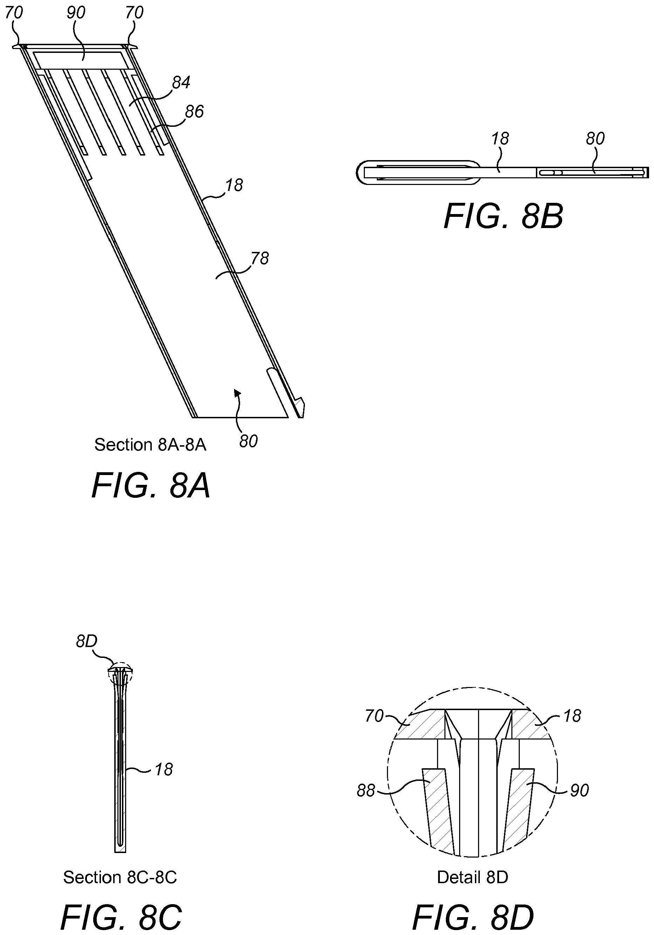

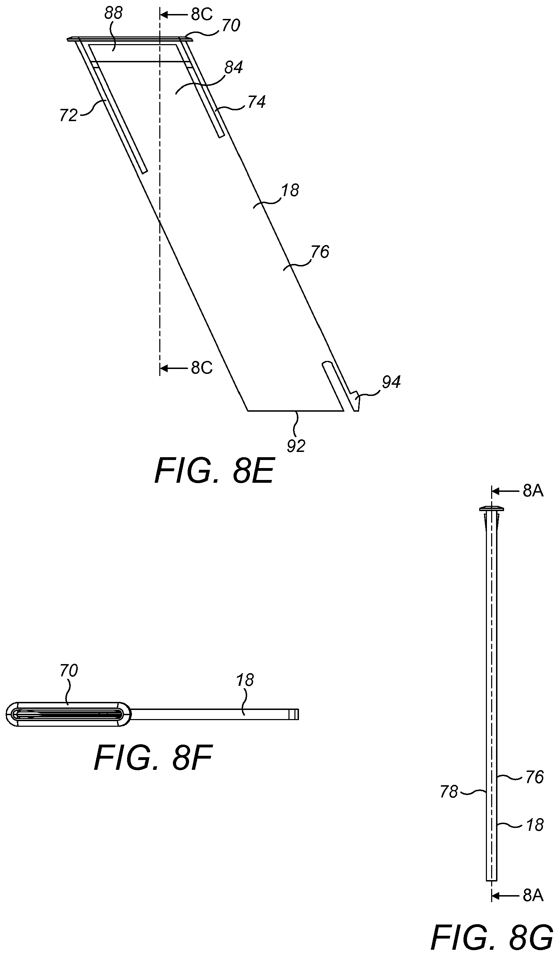

As shown in Figures 8A to 8G, each of the knife holders 18 comprises a body 68 having an entrance 70 in the form of an elongate ring connected by connectors 72, 74 to side walls 76, 78 having an inner slot 80 formed therebetween.

The side walls 76, 78 include flexible entrance tongues 82, 84 positioned between the connectors 72, 74, each of the tongues 82, 84 being formed with a series of five elongate friction ribs extending along the longitudinal direction of the inner slot 80 and being mutually spaced apart, the respective ribs 86 being arranged to be closely spaced from one another or to resiliently engage one another when the flexible entrance tongues 82, 84 are in a rest configuration thereof with no knife positioned in the inner slot 80. Each of the flexible entrance tongues 82, 84 also includes a flared entrance guide member 88, 90 arranged for guiding one of the knives 22a, 22b, 22 into the inner slot 80.

The knife holder 18 also includes at a lower end 92 thereof a resilient latch 94 for engagement in a respective latch recess 62 of the main block 12 to hold the knife holder 18 firmly within the main block 12 until the resilient latch 94 is operated to release the knife holder 18 from the main block 12 for cleaning purposes.

The knife holder 18 is integrally formed by moulding.

A user (not shown) may insert any of the knives 22 including the knives 22a, 22b through the entrance ring 70, which is relatively rigid, the knife 22 being guided by the resilient entrance guide members 88, 90 through to engage the friction ribs/formations 86 and the knife may thus be fully inserted into the knife holder 18, with the engagement of the friction ribs 86 with the blade 24, 32 holding the knife in the configuration in which it is left by the user, such that knives of various sizes may be inserted into the knife holder 18 and held in the desired configuration as left by the user. The knife may later be withdrawn against the friction of the friction ribs/formations 86 and with the resilient latch 94 holding the knife holder 18 in the main block 12.

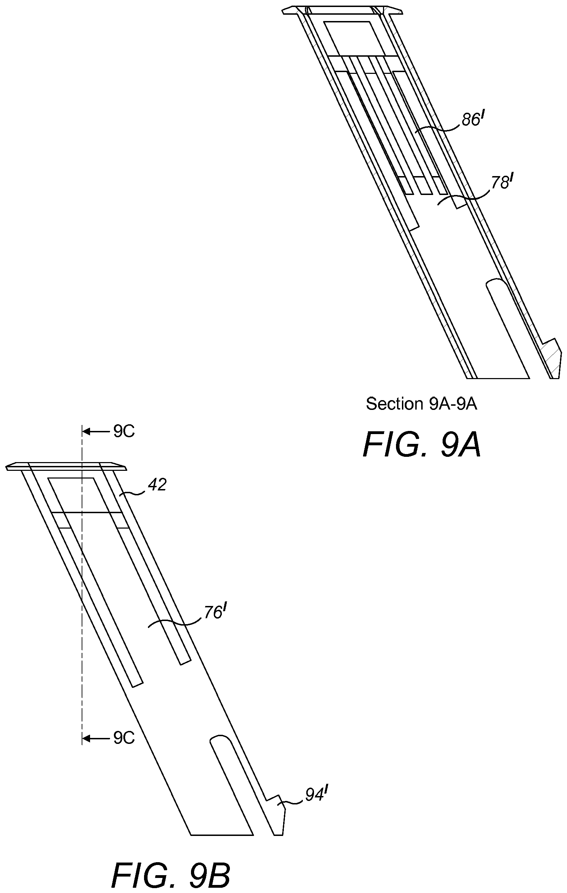

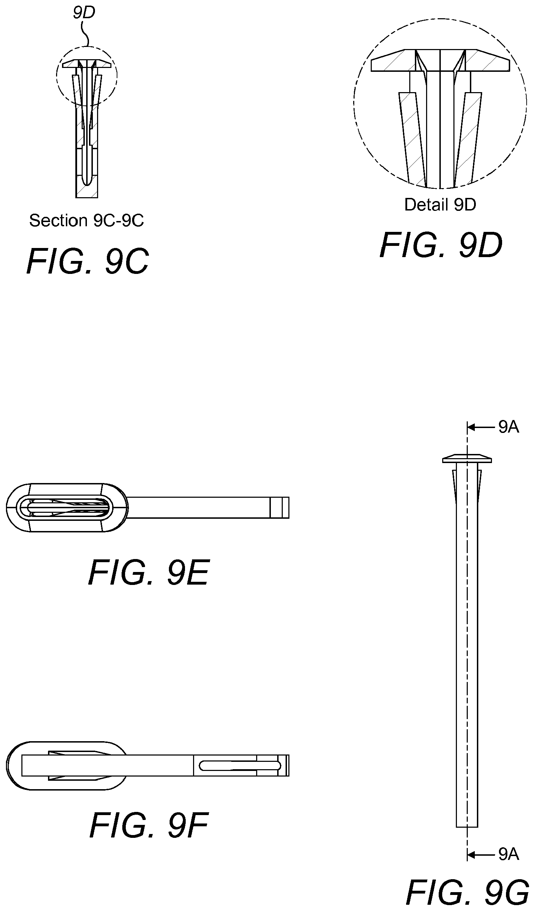

With reference to Figures 9A to 9G, each auxiliary knife holder 42 essentially comprises a smaller version of each of the knife holders 18 so will not be described in detail, although it is noted from Figure 9A that only three friction ribs 86' are provided on each side wall 76', 78' of the auxiliary knife holder 42 and resilient latches 94' are engageable within the latch recesses 66.

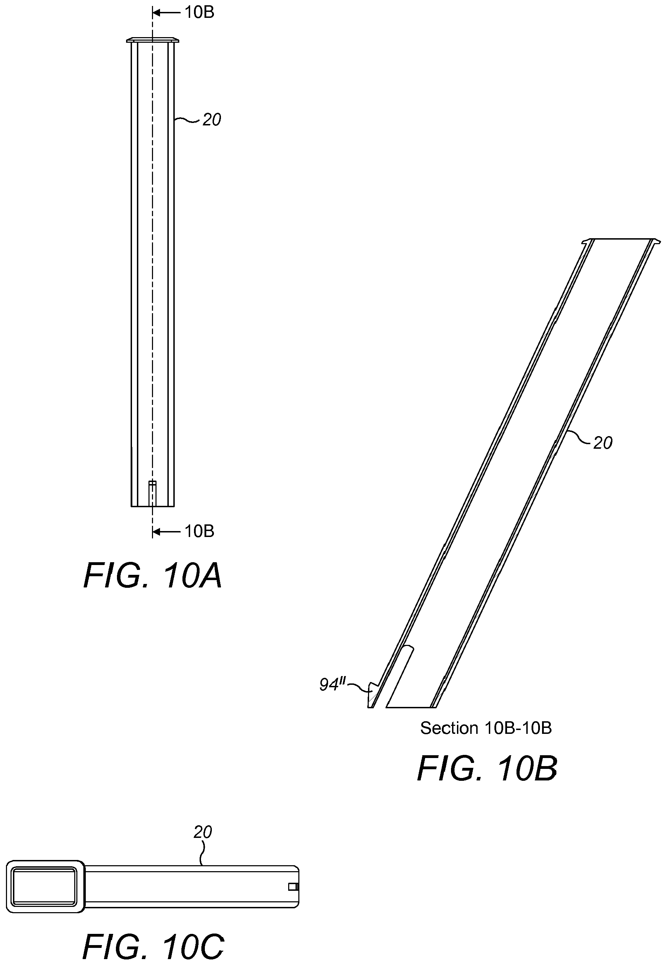

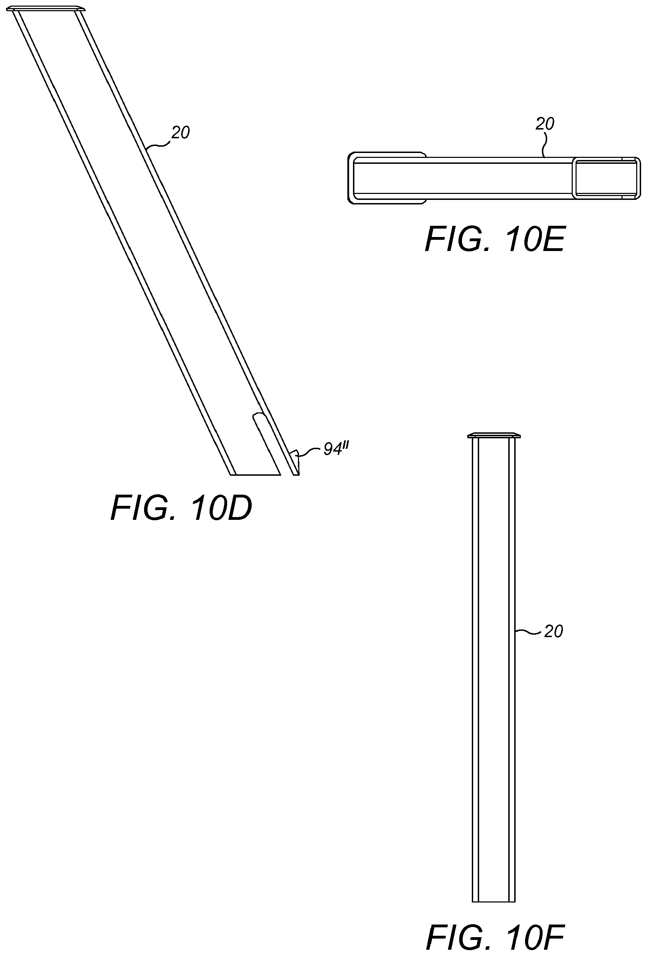

With reference to Figures 10A to 10F, the scissor holder 20 is similar to the knife holders 18 and auxiliary knife holders 42 although has no friction ribs/formations in this particular embodiment even though they could be included in other embodiments. The scissor holder 20 does, however, include a resilient latch 94" for engagement in the latch recess 66 of the main block 12. The scissor holder 20 may alternatively be used for storing other implements, such as shears, e.g. poultry shears, and knife sharpening steels or other implements.

In some embodiments, the auxiliary block 14 and/or stand 16 may be omitted and the main block 12 may be reshaped to manage the position of the centre of gravity with it loaded or unloaded, accordingly.

With the culinary knife block assembly 10 as described and in other embodiments, the user may easily place their various knives and other implements in the particular knife holders 18 that they desire and are not constrained as in the prior art by only having defined positions for the knives/implements. In particular, the knife holders 18 and auxiliary knife holders 42 may accommodate knives of varying knife shapes and sizes and the handles thereof may be lined up relative to the main block 12 and auxiliary block 14 as desired by the user, advantageously by engagement of the blades therefore with the friction ribs/formations 86, i.e. without having a knife with a small blade having its handle droop by gravity to a low misaligned position. Also, the knife holders 18 and auxiliary knife holders 42 may, using the resilient latches 94, 94', 94", be conveniently removed from the main block 12 and auxiliary block 14 for cleaning purposes or replacement.

In some embodiments, one or more knife holders 18 and/or one or more of the auxiliary knife holders 42 may be formed integrally within a culinary block, and/or one or more knife holders or auxiliary knife holders may be formed integrally with one another.

Various modifications may be made to the embodiments described without departing from the scope of the invention as defined by the accompanying claims.

## Claims

1. A culinary utensil holder for holding knives and the like, the holder comprising a body having an entrance and a distinct friction formation located in a path along the body.

2. A holder as claimed in Claim 1 in which the body comprises a sheath having two mutually spaced opposed side walls with a slot therebetween for sheathing a knife or the like.

3. A holder as claimed in Claim 2 in which the formation is formed on one of the side walls.

4. A holder as claimed in Claim 2 or Claim 3 in which the formation comprises an elongate rib, the rib optionally having a rectangular, square or concave cross-section extending across a longitudinal extent thereof.

5. A holder as claimed in Claim 4 which includes a series of said ribs formed on said one of the side walls, said ribs extending parallel to and spaced from one another.

6. A holder as claimed in Claim 5 in which the other side wall includes at least one opposing friction formation, preferably a further series of ribs formed as a mirror image of said ribs.

7. A holder as claimed in any one of Claims 2 to 6 in which said side walls are generally parallel to one another; and preferably in a rest configuration thereof tapering towards one another in a direction remote from the entrance, optionally being resiliently engaged against one another towards an end of said side walls remote from said entrance.

8. A holder as claimed in Claim 7 in which the entrance comprises an elongate ring connected to the side walls.

9. A holder as claimed in Claim 8 in which each side wall includes a flared entrance guide member at an end of the side wall proximal to the entrance, the flared entrance guide members being spaced from the elongate ring and resilient.

10. A holder as claimed in any one of Claims 2 to 9 which includes a latch member attached to at least one of the side walls for releasably latching the holder into a culinary utensil block.

11. A holder as claimed in Claim 10 in which the latch is formed integrally, e.g. by moulding, with the side walls.

12. A culinary block assembly including a block with a plurality of slots, and a plurality of culinary utensil holders as claimed in any preceding claim adapted to be located in the slots.

13. A culinary block assembly as claimed in Claim 12 which includes at least two said culinary utensil holders which are identical to one another and are located in respective ones of said slots, and in which at least two knives of different configurations are sheathed in said culinary utensil holder.

14. A culinary block assembly as claimed in Claim 12 or Claim 13 which includes at least five and optionally at least six, eight or ten identical said culinary utensil holders locatable in corresponding slots formed in said block.

15. A culinary utensil holder for holding knives and the like, the holder comprising a body for sheathing kitchen utensils, the body including a latch member for releasably latching the holder into a culinary utensil block, the latch member optionally being formed integrally with said body e.g. by moulding.
